# EUROPEAN PATENT APPLICATION

(11) **EP 4 420 923 A1**
(43) Date of publication of application: **28.08.2024**
(21) Application number: 22930419.1
(22) Date of filing: 15.04.2022
(51) Int. Cl.: B60L 53/20, H02J 3/32

(54) **POWER BATTERY VOLTAGE REGULATION CIRCUIT AND SYSTEM, AND CONTROL METHOD AND CONTROL APPARATUS THEREFOR**

(30) Priority: 09.03.2022 WO PCT/CN2022/080004
(71) Applicant: Contemporary Amperex Technology Co., Limited, Ningde, Fujian 352100 (CN)
(72) Inventor: ZHAO, Yuanmiao, Ningde, Fujian 352100 (CN); LI, Zhanliang, Ningde, Fujian 352100 (CN); YAN, Yu, Ningde, Fujian 352100 (CN); CHEN, Xinwei, Ningde, Fujian 352100 (CN); GAO, Jinfeng, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2022/087183
(87) International publication number: WO 2023/168787

(57) **Abstract**

The present application provides a power battery voltage regulation circuit, including a power battery (11), a heating module, a charging and discharging interface (13), and a voltage regulation switch assembly; the heating module includes an energy storage element and a switch module; the power battery (11) and the switch module are connected in parallel; an external charging and discharging device is connected in parallel with the power battery (11) through the charging and discharging interface (13); the voltage regulation switch assembly includes multiple switches, and the multiple switches are arranged between the charging and discharging interface (13) and the power battery (11); and the voltage regulation switch assembly and the switch module are configured to adjust the charging and discharging voltages between the external charging and discharging device and the power battery (11) in response to a voltage regulation control signal. The present application further provides an electrical device, a power battery voltage regulation system, a regulation method, and a regulation device. The switching between different charging and discharging loops is realized by controlling the voltage regulation switch assembly and the switch module, thereby realizing different charging and discharging needs under the voltage regulation control signal.

## Description

### Technical Field

The present application relates to the technical field of batteries, in particular to a power battery voltage regulation circuit and system, and a control method and a control apparatus thereof.

### Background

Due to the advantages of high energy density, recyclable charging, safety and environmental protection, power batteries are widely used in the fields of new energy vehicles, consumer electronics, energy storage systems and the like. With the development of the battery technology, various performances of power batteries are constantly improved. Especially, the voltages of power batteries are generally increased significantly.

However, the maximum output voltage of the currently used charging device is still lower than the charging voltage required by a new power battery with a higher voltage, and it is also difficult for the power battery to adjust the output voltage according to the needs of different load devices. Therefore, how to flexibly adjust the charging and discharging voltages of the power battery in different scenarios is an urgent problem to be solved.

### Summary of the Invention

Embodiments of the present application provide a power battery voltage regulation system and a control method and a control apparatus thereof, which can flexibly adjust the charging and discharging voltages of a power battery to meet the needs of the power battery for a charging voltage or a discharging voltage in different scenarios.

In the first aspect, the present application provides a power battery voltage regulation circuit, including a power battery, a heating module, a charging and discharging interface, and a voltage regulation switch assembly; the heating module includes an energy storage element and a switch module; the power battery and the switch module are connected in parallel; an external charging and discharging device is connected in parallel with the power battery through the charging and discharging interface; the voltage regulation switch assembly includes multiple switches, and the multiple switches are arranged between the charging and discharging interface and the power battery; and the voltage regulation switch assembly and the switch module are configured to adjust the charging and discharging voltages between the external charging and discharging device and the power battery in response to a voltage regulation control signal.

The power battery voltage regulation circuit provided in the embodiments of the present application realizes the switching between different charging and discharging loops by controlling the voltage regulation switch assembly and the switch module, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

In some embodiments, the voltage regulation switch assembly includes a first switch, a second switch, a third switch, a fourth switch, and a fifth switch; the first switch and the second switch are respectively arranged on the positive electrode side and the negative electrode side of the power battery; the fourth switch and the fifth switch are respectively arranged on the positive electrode side and the negative electrode side of the charging and discharging interface; and the third switch is arranged between the positive electrode of the power battery and the charging and discharging interface.

The power battery voltage regulation circuit provided in the embodiments of the present application fully considers the demand for voltage regulation when the power battery is charged or discharged under different circumstances, and switches are arranged at different positions in the charging and discharging loops of the power battery to achieve the purpose of switching between different charging and discharging loops. By controlling the switching-on and switching-off of different switches in the voltage regulation switch assembly and the switch module, loops of direct charging, boost charging, boost discharging and step-down discharging are respectively formed in the same circuit structure, so that the charging and discharging voltages of the power battery can be flexibly adjusted without changing the circuit structure to meet the needs of the power battery for a charging voltage or a discharging voltage in different scenarios.

In some embodiments, one end of the first switch is connected to the positive electrode of the power battery, and the other end of the first switch is connected to the first end of the switch module; one end of the second switch is connected to the negative electrode of the power battery, and the other end of the second switch is connected to the second end of the switch module; the switch module includes a charging and discharging switching module and a bridge arm group which are connected in parallel, one end of the third switch is collinearly connected to all upper bridge arms of the bridge arm group, and the other end of the third switch is connected to the first end of the charging and discharging switching module; one end of the fourth switch is connected to the positive electrode of the charging and discharging interface, and the other end of the fourth switch is connected to the first end of the charging and discharging switching module; and one end of the fifth switch is connected to the negative electrode of the charging and discharging interface, and the other end of the fifth switch is collinearly connected to the second end of the charging and discharging switching module and all lower bridge arms of the bridge arm group.

In the embodiments provided by the present application, switches are arranged at different positions in the charging and discharging loops of the power battery to achieve the purpose of switching between different charging and discharging loops. The output voltage can be flexibly adjusted according to the needs of load devices without changing the circuit structure. Furthermore, the circuit structure of the power battery voltage regulation system is used for providing energy for a motor, so that the boost discharging of the power battery can be realized by switching-on and switching-off of different switches in the same circuit.

In some embodiments, the switch module includes a charging and discharging switching module and a bridge arm group which are connected in parallel, the first end of the energy storage element is connected to the bridge arm group, and the second end of the energy storage element is connected to the charging and discharging switching module.

The power battery voltage regulation circuit provided in the embodiments of the present application stores energy and provides energy during the charging and discharging through the charging and discharging switching module and the bridge arm group according to different charging and discharging needs, thereby ensuring the increase or decrease of the charging and discharging voltages between the external charging and discharging device and the power battery.

In some embodiments, the energy storage element includes an M-phase motor; the bridge arm group includes M phases of bridge arms, wherein M is a positive integer; M phases of windings of the M-phase motor are respectively connected to the connecting point of the upper and lower bridge arms in each phase of bridge arms in the M phases of bridge arms in a mode of one-to-one correspondence; the charging and discharging switching module includes a first switching circuit and a second switching circuit which are connected in series; and the connecting point of the first switching circuit and the second switching circuit is connected to the neutral point of the M-phase motor.

The power battery voltage regulation circuit provided in the embodiments of the present application stores energy and provides energy during the charging and discharging through the charging and discharging switching module and the bridge arm group according to different charging and discharging needs, thereby ensuring the increase or decrease of the charging and discharging voltages between the external charging and discharging device and the power battery. The free switching of charging and discharging between the battery and the motor, between the motor and the external device, and between the battery and the external device can be further ensured through the charging and discharging switching module.

In some embodiments, both the first switching circuit and the second switching circuit include a triode and a flyback diode which are connected in parallel.

The power battery voltage regulation circuit provided in the embodiments of the present application increases the efficiency of the charging and discharging switching module for free switching of charging and discharging between the battery and the motor, between the motor and the external device, and between the battery and the external device through the triode and the flyback diode which are connected in parallel.

In some embodiments, both the first switching circuit and the second switching circuit include a triode or a relay switch.

The power battery voltage regulation circuit provided in the embodiments of the present application increases the efficiency of the charging and discharging switching module for free switching of charging and discharging between the battery and the motor, between the motor and the external device, and between the battery and the external device through the triode or the relay switch.

In some embodiments, the first switching circuit includes a diode, and the second switching circuit includes a switch; or, the first switching circuit includes a switch, and the second switching circuit includes a diode.

The power battery voltage regulation circuit provided in the embodiments of the present application increases the efficiency of the charging and discharging switching module for free switching of charging and discharging between the battery and the motor, between the motor and the external device, and between the battery and the external device through the free combination and parallel connection of the diode and the switch.

In some embodiments, a sixth switch is arranged between the connecting point of the first switching circuit and the second switching circuit and the neutral point of the M-phase motor.

The power battery voltage regulation circuit provided in the embodiments of the present application realizes flexible switching between the first switching circuit and the second switching circuit in the charging and discharging switching module and the neutral point of the motor through the sixth switch, thereby ensuring free switching of charging and discharging.

In some embodiments, both ends of the power battery are connected in parallel with a first voltage stabilizing capacitor, and both ends of the charging and discharging interface are connected in parallel with a second voltage stabilizing capacitor.

The power battery voltage regulation circuit provided in the embodiments of the present application ensures the stability and continuity of the voltages at both ends of the power battery or the charging and discharging interface during the charging and discharging through the first voltage stabilizing capacitor and the second voltage stabilizing capacitor.

In some embodiments, the second switch is connected in parallel with a branch circuit, and the branch circuit includes a resistor and a seventh switch which are connected in series.

The power battery voltage regulation circuit provided in the embodiments of the present application realizes flexible cooperation with the second switch through the branch circuit including the resistor and the seventh switch which are connected in series, thereby accurately adjusting the charging and discharging voltages between the external charging and discharging device and the power battery.

In the second aspect, the present application provides an electrical device, including a control module and the power battery voltage regulation circuit according to any embodiment in the first aspect. The control module is connected to the switch module and the voltage regulation switch assembly, and is configured to control the voltage regulation switch assembly and the switch module to adjust the charging and discharging voltages between the external charging and discharging device and the power battery.

The electrical device provided in the embodiments of the present application realizes the switching between different charging and discharging loops by the control module and the power battery voltage regulation circuit, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

In the third aspect, the present application provides a power battery voltage regulation system, including an external charging and discharging device and the electrical device in the second aspect above. The external charging and discharging device is connected to a charging and discharging interface in the electrical device.

The power battery voltage regulation system provided in the embodiments of the present application realizes the switching between different charging and discharging loops by the external charging and discharging device and the electrical device, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

In the fourth aspect, the present application provides a power battery voltage regulation method applied to the power battery voltage regulation system in the third aspect, including: obtaining the first voltage of the power battery and obtaining the second voltage of the external charging and discharging device during the charging and discharging of the external charging and discharging device and the electrical device; and controlling, according to the first voltage and the second voltage, the voltage regulation switch assembly and the switch module to adjust the charging and discharging voltages between the external charging and discharging device and the power battery.

The power battery voltage regulation method provided in the embodiments of the present application realizes the switching between different charging and discharging loops by the voltage regulation switch assembly and the switch module in the power battery voltage regulation system, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

In some embodiments, the first voltage is a battery voltage of the power battery, and the second voltage is an output voltage of the external charging and discharging device. The controlling, according to the first voltage and the second voltage, the voltage regulation switch assembly and the switch module to adjust the charging and discharging voltages between the external charging and discharging device and the power battery specifically includes: when the battery voltage is less than the output voltage, controlling the voltage regulation switch assembly and the switch module to enable the external charging and discharging device to charge the power battery; and when the battery voltage is greater than the output voltage, controlling the voltage regulation switch assembly and the switch module to increase the charging voltage of the external charging and discharging device to charge the power battery.

The power battery voltage regulation method provided in the embodiments of the present application flexibly adjusts the charging voltage of the power battery according to the relationship between the voltages of the charging device and the power battery, and the circuit structure of the power battery voltage regulation system is used for providing energy for a motor, so that the boost charging of the power battery can be realized by switching-on and switching-off of different switches in the same circuit. As a result, the charging device can not only charge a power battery with a voltage lower than the maximum output voltage of the charging device, but also charge a power battery with a higher voltage than the maximum output voltage of the charging device. The control method can flexibly adjust the charging voltage of the power battery in different scenarios, which can not only solve the compatibility problem of the external charging and discharging device, but also make the charging process of the power battery not limited by the maximum output voltage of the charging device.

In some embodiments, the switch module includes a charging and discharging switching module and a bridge arm group which are connected in parallel. The voltage regulation switch assembly includes a first switch, a second switch, a third switch, a fourth switch, and a fifth switch. The controlling the voltage regulation switch assembly and the switch module to enable the external charging and discharging device to charge the power battery specifically includes: controlling the first switch, the second switch, the third switch, the fourth switch and the fifth switch to be switched on, and all bridge arms in the bridge arm group and the charging and discharging switching module to be switched off.

The power battery voltage regulation method provided in the embodiments of the present application can flexibly adjust the voltage output to the power battery according to different voltages of the charging device without changing the circuit structure, and the circuit structure of the power battery voltage regulation system is used for providing energy for a motor, so that the output voltage of the external charging and discharging device can be reduced by switching-on and switching-off of different switches in the same circuit. As a result, the charging device can charge a power battery with a battery voltage lower than the maximum output voltage of the charging device.

In some embodiments, when the battery voltage is greater than the output voltage, controlling the voltage regulation switch assembly and the switch module to increase the charging voltage of the external charging and discharging device to charge the power battery specifically includes: in the first period of time, controlling the external charging and discharging device to charge the energy storage element; and in the second period of time, controlling the external charging and discharging device and the energy storage element to charge the power battery together.

The power battery voltage regulation method provided in the embodiments of the present application can first control the external charging and discharging device to charge the energy storage element and then control the external charging and discharging device and the energy storage element to charge the power battery together when the battery voltage is greater than the output voltage without changing the circuit structure, so as to realize continuous boost charging.

In some embodiments, the switch module includes a charging and discharging switching module and a bridge arm group which are connected in parallel. The voltage regulation switch assembly includes a first switch, a second switch, a third switch, a fourth switch, and a fifth switch. The controlling the voltage regulation switch assembly and the switch module to increase the charging voltage of the external charging and discharging device to charge the power battery specifically includes: in the first period of time, controlling the fourth switch, the fifth switch, all lower bridge arms of the bridge arm group and the first switching circuit of the charging and discharging switching module to be switched on, and the first switch, the second switch, the third switch, all upper bridge arms of the bridge arm group and the second switching circuit of the charging and discharging switching module to be switched off; and in the second period of time, controlling the first switch, the second switch, the fourth switch, the fifth switch, all upper bridge arms of the bridge arm group and the first switching circuit of the charging and discharging switching module to be switched on, and the third switch, all lower bridge arms of the bridge arm group and the second switching circuit of the charging and discharging switching module to be switched off, wherein the control in the first period of time and the control in the second period of time are continuously performed alternately.

The embodiments provided in the present application can flexibly adjust the voltage output to the power battery according to different voltages of the charging device without changing the circuit structure, and the circuit structure of the power battery voltage regulation system is used for providing energy for a motor, so that the output voltage of the external charging and discharging device can be increased by switching-on and switching-off of different switches in the same circuit. As a result, the charging device can charge a power battery with a battery voltage higher than the maximum output voltage of the charging device.

In the charging process of the power battery, the first period of time and the second period of time are controlled alternately to realize continuous charging after boosting, thereby ensuring the continuous charging process.

In some embodiments, the first voltage is an output voltage of the power battery, and the second voltage is a request voltage of the external charging and discharging device as a load. The controlling, according to the first voltage and the second voltage, the voltage regulation switch assembly and the switch module to adjust the charging and discharging voltages between the external charging and discharging device and the power battery specifically includes: when the output voltage is greater than the request voltage, controlling the voltage regulation switch assembly and the switch module to reduce the charging voltage of the power battery to charge the external charging and discharging device; and when the output voltage is less than the request voltage, controlling the voltage regulation switch assembly and the switch module to increase the charging voltage of the power battery to charge the external charging and discharging device.

The control method of the power battery voltage regulation system provided in the embodiments of the present application can adapt to various load devices with different demand voltages without changing the circuit structure by controlling the voltage regulation switch assembly and the switch module under different circumstances, so that the power battery voltage regulation system can provide electrical energy for both load devices with a demand voltage higher than the voltage of the power battery and load devices with a demand voltage lower than the voltage of the power battery. As a result, the discharging voltage of the power battery can be flexibly adjusted in different scenarios to provide electrical energy for multiple load devices.

In some embodiments, the controlling the voltage regulation switch assembly and the switch module to reduce the charging voltage of the power battery to charge the external charging and discharging device specifically includes: in the first period of time, controlling the power battery to charge the energy storage element; and in the second period of time, controlling the energy storage element to charge the external charging and discharging device as a load.

The power battery voltage regulation method provided in the embodiments of the present application can first control the power battery to charge the energy storage element and then control the energy storage element to charge the external charging and discharging device as a load when the battery voltage is greater than the output voltage without changing the circuit structure, so as to realize step-down discharging.

In some embodiments, the switch module includes a charging and discharging switching module and a bridge arm group which are connected in parallel. The voltage regulation switch assembly includes a first switch, a second switch, a third switch, a fourth switch, and a fifth switch. The controlling the voltage regulation switch assembly and the switch module to reduce the charging voltage of the power battery to charge the external charging and discharging device specifically includes: in the first period of time, switching on the first switch, the second switch, all upper bridge arms of the bridge arm group and the second switching circuit of the charging and discharging switching module, and switching off the third switch, the fourth switch, the fifth switch, all lower bridge arms of the bridge arm group and the first switching circuit of the charging and discharging switching module; and in the second period of time, controlling the fourth switch, the fifth switch, all lower bridge arms of the bridge arm group and the first switching circuit of the charging and discharging switching module to be switched on, and the first switch, the second switch, the third switch, all upper bridge arms of the bridge arm group and the second switching circuit of the charging and discharging switching module to be switched off, wherein the control in the first period of time and the control in the second period of time are continuously performed alternately.

The embodiments provided in the present application can flexibly adjust the output voltage according to the needs of load devices without changing the circuit structure, and the circuit structure of the power battery voltage regulation system is used for providing energy for a motor, so that the step-down discharging of the power battery can be realized by switching-on and switching-off of different switches in the same circuit. As a result, the power battery voltage regulation system can provide electrical energy for load devices with a demand voltage lower than the voltage of the power battery.

In the charging process of the power battery, the first period of time and the second period of time are controlled alternately to realize continuous discharging after step-down, thereby ensuring the continuous discharging process.

In some embodiments, the controlling the voltage regulation switch assembly and the switch module to increase the charging voltage of the power battery to charge the external charging and discharging device specifically includes: in the first period of time, controlling the power battery to charge the energy storage element; and in the second period of time, controlling the power battery and the energy storage element to charge the external charging and discharging device as a load together.

The power battery voltage regulation method provided in the embodiments of the present application can first control the power battery to charge the energy storage element and then control the power battery and the energy storage element to charge the external charging and discharging device as a load together when the battery voltage is less than the request voltage without changing the circuit structure, so as to realize boost discharging.

In some embodiments, the switch module includes a charging and discharging switching module and a bridge arm group which are connected in parallel. The voltage regulation switch assembly includes a first switch, a second switch, a third switch, a fourth switch, and a fifth switch. The controlling the voltage regulation switch assembly and the switch module to increase the charging voltage of the power battery to charge the external charging and discharging device specifically includes: in the first period of time, controlling the first switch, the second switch, all upper bridge arms of the bridge arm group and the second switching circuit of the charging and discharging switching module to be switched on, and the third switch, the fourth switch, the fifth switch, all lower bridge arms of the bridge arm group and the first switching circuit of the charging and discharging switching module to be switched off; and in the second period of time, controlling the first switch, the second switch, the fourth switch, the fifth switch, all upper bridge arms of the bridge arm group and the first switching circuit of the charging and discharging switching module to be switched on, and the third switch, all lower bridge arms of the bridge arm group and the second switching circuit of the charging and discharging switching module to be switched off, wherein the control in the first period of time and the control in the second period of time are continuously performed alternately.

The embodiments provided in the present application can flexibly adjust the output voltage according to the needs of load devices without changing the circuit structure, and the circuit structure of the power battery voltage regulation system is used for providing energy for a motor, so that the boost discharging of the power battery can be realized by switching-on and switching-off of different switches in the same circuit. As a result, the power battery voltage regulation system can provide electrical energy for load devices with a demand voltage higher than the voltage of the power battery.

In the charging process of the power battery, the first period of time and the second period of time are controlled alternately to realize continuous discharging after boosting, thereby ensuring the continuous discharging process.

In the fifth aspect, the present application provides a power battery voltage regulation device, including a memory configured to store executable instructions; and a processor connected to the memory to execute the executable instructions to complete the power battery voltage regulation method according to any term in the fourth aspect.

The power battery voltage regulation device provided in the embodiments of the present application realizes the switching between different charging and discharging loops by the voltage regulation switch assembly and the switch module in the power battery voltage regulation system, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

In the sixth aspect, the present application provides a computer-readable storage medium storing a computer program. The computer program is executed by a processor to implement the power battery voltage regulation method according to any term in the fourth aspect.

The computer-readable storage medium provided in the embodiments of the present application realizes the switching between different charging and discharging loops by the voltage regulation switch assembly and the switch module in the power battery voltage regulation system, thereby flexibly and efficiently adjusting the charging and discharging voltages between the external charging and discharging device and the power battery according to different charging and discharging needs under a voltage regulation control signal. For example, loops of direct charging, boost charging, boost discharging and step-down discharging are respectively formed in the same circuit structure to meet the needs of the power battery for a charging voltage or a discharging voltage in different scenarios.

### Description of Drawings

In order to illustrate the technical solutions in the embodiments of the present application more clearly, the following briefly introduces the drawings required in the embodiments of the present application. Obviously, the drawings described below are only some embodiments of the present application. For those of ordinary skill in the art, other drawings may also be obtained according to these drawings without any creative effort.
Fig. 1 is a schematic diagram of an application architecture of a charging method provided in an embodiment of the present application.
Fig. 2 is a circuit diagram of a power battery voltage regulation circuit provided in an embodiment of the present application.
Fig. 3 is a schematic block diagram of an electrical device provided in an embodiment of the present application.
Fig. 4 is a schematic block diagram of a power battery voltage regulation system provided in an embodiment of the present application.
Fig. 5 is a schematic flow chart of a control method of a power battery voltage regulation system provided in an embodiment of the present application.
Fig. 6 is a schematic flow chart of a control method of a power battery voltage regulation system provided in another embodiment of the present application.
Fig. 7, Fig. 8 and Fig. 9 are schematic diagrams of different charging loops of a power battery voltage regulation system provided in an embodiment of the present application to charge a power battery.
Fig. 10 is a schematic flow chart of a control method of another power battery voltage regulation system provided in an embodiment of the present application.
Fig. 11 is a schematic flow chart of a control method of another power battery voltage regulation system provided in an embodiment of the present application.
Fig. 12, Fig. 13 and Fig. 14 are schematic diagrams of different charging loops of a power battery voltage regulation system provided in an embodiment of the present application to charge an external load.
Fig. 15 is a schematic flow chart of a control method of another power battery voltage regulation system provided in an embodiment of the present application.
Fig. 16 is a schematic structural diagram of a power battery voltage regulation device provided in an embodiment of the present application.

In the drawings, the drawings are not drawn according to an actual scale.

### Detailed Description

The embodiments of the present application are further described in detail below with reference to the drawings and embodiments. The following detailed description of the embodiments and the drawings are used to illustrate the principle of the present application by way of example, but should not be used to limit the scope of the present application, that is, the present application is not limited to the described embodiments.

In the description of the present application, it should be noted that, unless otherwise stated, "multiple" means two or more; and the orientations or position relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are used for descriptive purposes only, and may not be construed as indicating or implying relative importance. "Vertical" is not strictly vertical, but within an allowable range of an error. "Parallel" is not strictly parallel, but within an allowable range of an error.

The orientation words appearing in the following description are the directions shown in the figures, and do not limit the specific structure of the present application. In the description of the present application, it should be noted that the terms "mounting", "connecting" and "connection" should be understood in a broad sense, unless otherwise explicitly specified or defined. For example, the connection may be fixed connection, detachable connection, or integrated connection; and the connection may be direct connection or indirect connection through an intermediate medium. For those of ordinary skill in the art, the specific meanings of the above terms in the present application may be understood according to specific circumstances.

With the development of the battery technology, various performances of power batteries are constantly improved. Especially, the voltages of power batteries are generally increased significantly. For the new power battery with a higher voltage, only charging devices that can output a higher voltage correspondingly can charge the battery. However, most of the charging devices currently used can only charge traditional power batteries with lower voltages, and the maximum output voltage cannot reach the voltage required by the new power battery. If all charging devices are replaced in order to adapt to the new power battery, this will lead to waste of the existing charging devices, and also increase unnecessary costs.

In addition, with the research and development of various load devices (such as vehicle-mounted devices), the output voltage of the power battery required by different load devices varies. Therefore, a method is needed to more flexibly adjust the output voltage of the power battery during the discharging, so as to meet the needs of different load devices.

Based on this, the embodiments of the present application provide a power battery voltage regulation system, and a control method and a control apparatus thereof. The power battery voltage regulation system includes a power battery, a switch module, a charging and discharging interface, and a motor. By controlling the switching-on and switching-off of different switches in the switch module, direct charging or boost charging is realized in different scenarios, or boost discharging or step-down discharging is realized in different scenarios.

The power battery in the embodiments of the present application may be a lithium ion battery, a lithium metal battery, a lead acid battery, a nickel cadmium battery, a nickel hydrogen battery, a lithium sulfur battery, a lithium air battery, or a sodium ion battery, which is not limited herein. In terms of scale, the battery in the embodiments of the present application may be a single cell, a battery module or a battery pack, which is not limited herein. In terms of application scenarios, the battery can be used in power devices such as vehicles and ships. For example, the battery can be used in an electric vehicle to supply power to a motor of the electric vehicle so as to serve as a power source for the electric vehicle. The battery can also supply power to other electrical devices in the electric vehicle, such as an air conditioner in the vehicle and a vehicle player.

For the convenience of description, the application of the power battery to a new energy vehicle (electric vehicle) will be described below as an example.

The driving motor and the control system thereof are one of the core components of the new energy vehicle, and the driving characteristics thereof determine the main performance indexes of the vehicle in running. A motor driving system of the new energy vehicle is mainly composed of an electric motor (that is, a motor), a power converter, a motor controller (such as an inverter), various detection sensors, and a power source. The motor is a rotating electromagnetic machine that operates according to the principle of electromagnetic induction, and is configured to achieve the conversion of electrical energy to mechanical energy. During operation, electrical power is absorbed from an electrical system, and mechanical power is outputted to a mechanical system.

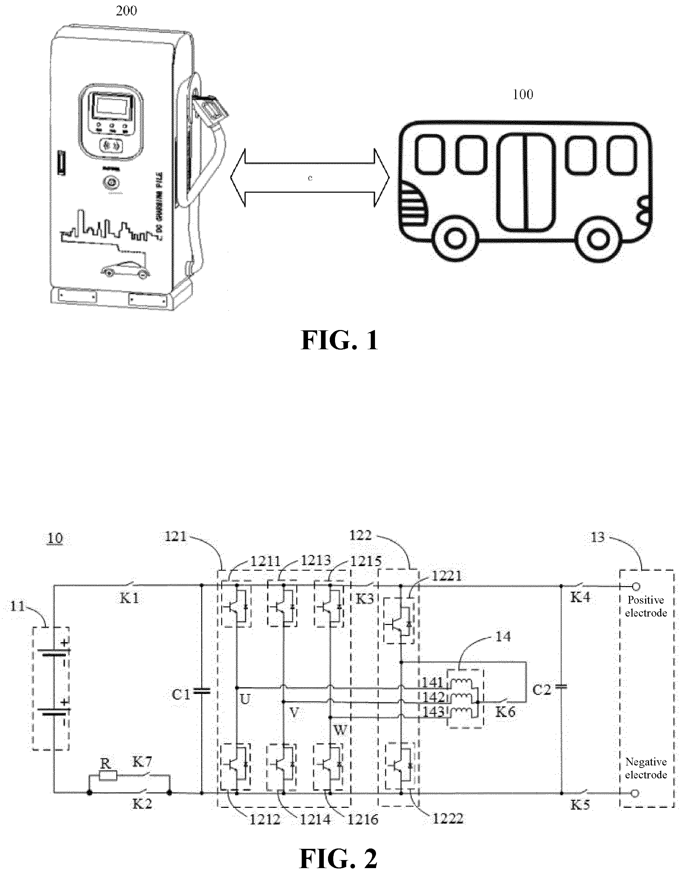

Fig. 1 is a schematic diagram of an application architecture that can be applied by a charging method according to an embodiment of the present application. The application architecture includes a battery management system (BMS) 100 and a charging pile 200. The BMS 100 can be connected to the charging pile 200 through a communication line for information interaction with the charging pile 200. For example, the communication line may be a controller area network (CAN) communication line or a daisy chain communication line.

The BMS 100 is a BMS of a power battery, and the power battery is a battery that provides a power source for an electrical apparatus. Optionally, the power battery may be a power storage battery. In terms of the type of the battery, the power battery may be a lithium ion battery, a lithium metal battery, a lead acid battery, a nickel cadmium battery, a nickel hydrogen battery, a lithium sulfur battery, a lithium air battery, a sodium ion battery, or the like, which is not specifically limited in the embodiments of the present application. In terms of the scale of the battery, the power battery in the embodiments of the present application may be a cell/a battery cell, a battery module or a battery pack, which is not specifically limited in the embodiments of the present application. Optionally, the electrical apparatus may be vehicles, ships, spacecrafts, and the like, which is not limited in the embodiments of the present application. The BMS is a control system for protecting the use safety of the power battery, and is configured to implement functions such as charging and discharging management, high voltage control, battery protection, battery data acquisition and battery status evaluation. The BMS and the power battery may be integrated in the same device/apparatus, or the BMS may be arranged as a separate device/apparatus outside the power battery.

The charging pile 200, also known as a charger, is an apparatus for charging the power battery. The charging pile can output charging power according to the charging need of the BMS 100 to charge the power battery. For example, the charging pile 200 can output a voltage and a current according to the demand voltage and demand current sent by the BMS 100.

In order to meet the needs of the power battery for a charging voltage in different scenarios, the present application provides a power battery voltage regulation system.

Fig. 2 is a schematic block diagram of a power battery voltage regulation circuit 10 provided in an embodiment of the present application.

As shown in Fig. 2, the present application provides a power battery voltage regulation circuit 10, including a power battery 11, a heating module, a charging and discharging interface 13, and a voltage regulation switch assembly. The heating module includes an energy storage element and a switch module.

The power battery 11 and the switch module are connected in parallel. An external charging and discharging device is connected in parallel with the power battery 11 through the charging and discharging interface 13.

The voltage regulation switch assembly includes multiple switches, and the multiple switches are arranged between the charging and discharging interface 13 and the power battery 11.

The voltage regulation switch assembly and the switch module are configured to adjust the charging and discharging voltages between the external charging and discharging device and the power battery 11 in response to a voltage regulation control signal.

The power battery voltage regulation circuit provided in the embodiments of the present application realizes the switching between different charging and discharging loops by controlling the voltage regulation switch assembly and the switch module, thereby flexibly and efficiently adjusting the charging and discharging voltages between the external charging and discharging device and the power battery 11 according to different charging and discharging needs under a voltage regulation control signal. For example, loops of direct charging, boost charging, boost discharging and step-down discharging are respectively formed in the same circuit structure to meet the needs of the power battery 11 for a charging voltage or a discharging voltage in different scenarios.

During specific implementation, the voltage regulation switch assembly includes a first switch K1, a second switch K2, a third switch K3, a fourth switch K4, and a fifth switch K5; the first switch K1 and the second switch K2 are respectively arranged on the positive electrode side and the negative electrode side of the power battery 11; the fourth switch K4 and the fifth switch K5 are respectively arranged on the positive electrode side and the negative electrode side of the charging and discharging interface 13; and the third switch K3 is arranged between the positive electrode of the power battery 11 and a charging and discharging switching module 122.

Based on this, the power battery voltage regulation circuit in this embodiment fully considers the demand for voltage regulation when the power battery 11 is charged or discharged under different circumstances, and switches are arranged at different positions in the charging and discharging loops of the power battery 11 to achieve the purpose of switching between different charging and discharging loops.

Furthermore, by controlling the switching-on and switching-off of different switches in the voltage regulation switch assembly and the switch module, loops of direct charging, boost charging, boost discharging and step-down discharging are respectively formed in the same circuit structure, so that the charging and discharging voltages of the power battery 11 can be flexibly adjusted without changing the circuit structure to meet the needs of the power battery 11 for a charging voltage or a discharging voltage in different scenarios.

Further, in a specific embodiment, as shown in Fig. 2, one end of the first switch K1 is connected to the positive electrode of the power battery 11, and the other end of the first switch K1 is connected to the first end of the switch module; and one end of the second switch K2 is connected to the negative electrode of the power battery 11, and the other end of the second switch K2 is connected to the second end of the switch module.

The switch module includes a charging and discharging switching module 122 and a bridge arm group 121 which are connected in parallel, one end of the third switch K3 is collinearly connected to all upper bridge arms of the bridge arm group 121, and the other end of the third switch K3 is connected to the first end of the charging and discharging switching module 122; one end of the fourth switch K4 is connected to the positive electrode of the charging and discharging interface 13, and the other end of the fourth switch K4 is connected to the first end of the charging and discharging switching module 122; and one end of the fifth switch K5 is connected to the negative electrode of the charging and discharging interface 13, and the other end of the fifth switch K5 is collinearly connected to the second end of the charging and discharging switching module 122 and all lower bridge arms of the bridge arm group 121.

Based on this, in this embodiment, switches are arranged at different positions in the charging and discharging loops of the power battery 11 to achieve the purpose of switching between different charging and discharging loops. The output voltage can be flexibly adjusted according to the needs of load devices without changing the circuit structure. Furthermore, the circuit structure of the power battery voltage regulation system is used for providing energy for a motor 14, so that the boost discharging of the power battery 11 can be realized by switching-on and switching-off of different switches in the same circuit.

In some embodiments, the switch module includes a charging and discharging switching module 122 and a bridge arm group 121 which are connected in parallel, the first end of the energy storage element is connected to the bridge arm group 121, and the second end of the energy storage element is connected to the charging and discharging switching module 122.

Based on this, in this embodiment, the power battery voltage regulation circuit stores energy and provides energy during the charging and discharging through the charging and discharging switching module 122 and the bridge arm group 121 according to different charging and discharging needs, thereby ensuring the increase or decrease of the charging and discharging voltages between the external charging and discharging device and the power battery 11.

Specifically, as shown in Fig. 2, the energy storage element includes an M-phase motor 14 and a winding 141, a winding 142 and a winding 143 which are connected to the M-phase motor 14.

Further, the bridge arm group 121 includes M phases of bridge arms, wherein M is a positive integer; M phases of windings of the M-phase motor 14 are respectively connected to the connecting point of the upper and lower bridge arms in each phase of bridge arms in the M phases of bridge arms in a mode of one-to-one correspondence;

the charging and discharging switching module 122 includes a first switching circuit 1221 and a second switching circuit 1222 which are connected in series; and the connecting point of the first switching circuit 1221 and the second switching circuit 1222 is connected to the neutral point of the M-phase motor 14.

Based on this, in this embodiment, the power battery voltage regulation circuit stores energy and provides energy during the charging and discharging through the charging and discharging switching module 122 and the bridge arm group 121 according to different charging and discharging needs, thereby ensuring the increase or decrease of the charging and discharging voltages between the external charging and discharging device and the power battery 11. The free switching of charging and discharging between the battery and the motor 14, between the motor 14 and the external device, and between the battery and the external device can be further ensured through the charging and discharging switching module 122.

In some embodiments, as shown in Fig. 2, both the first switching circuit 1221 and the second switching circuit 1222 include a triode and a flyback diode which are connected in parallel.

The power battery voltage regulation circuit provided in the embodiments of the present application increases the efficiency of the charging and discharging switching module 122 for free switching of charging and discharging between the battery and the motor 14, between the motor 14 and the external device, and between the battery and the external device through the triode and the flyback diode which are connected in parallel.

In other embodiments, both the first switching circuit 1221 and the second switching circuit 1222 include a triode or a relay switch.

As a result, the efficiency of the charging and discharging switching module 122 for free switching of charging and discharging between the battery and the motor 14, between the motor 14 and the external device, and between the battery and the external device is increased through the triode or the relay switch.

In other embodiments not shown in figures, the first switching circuit 1221 includes a diode, and the second switching circuit 1222 includes a switch; or, the first switching circuit 1221 includes a switch, and the second switching circuit 1222 includes a diode.

As a result, the efficiency of the charging and discharging switching module 122 for free switching of charging and discharging between the battery and the motor 14, between the motor 14 and the external device, and between the battery and the external device is increased through the free combination and parallel connection of the diode and the switch.

As shown in Fig. 2, in some embodiments, a sixth switch K6 is arranged between the connecting point of the first switching circuit 1221 and the second switching circuit 1222 and the neutral point of the M-phase motor 14.

As a result, flexible switching between the first switching circuit 1221 and the second switching circuit 1222 in the charging and discharging switching module 122 and the neutral point of the motor 14 is realized through the sixth switch K6, thereby ensuring free switching of charging and discharging.

As shown in Fig. 2, in some embodiments, both ends of the power battery 11 are connected in parallel with a first voltage stabilizing capacitor C1, and both ends of the charging and discharging interface 13 are connected in parallel with a second voltage stabilizing capacitor C2.

As a result, the stability and continuity of the voltages at both ends of the power battery 11 or the charging and discharging interface 13 during the charging and discharging are ensured through the first voltage stabilizing capacitor C 1 and the second voltage stabilizing capacitor C2.

As shown in Fig. 2, in some embodiments, the second switch K2 is connected in parallel with a branch circuit, and the branch circuit includes a resistor and a seventh switch K7 which are connected in series.

As a result, flexible cooperation with the second switch K2 is realized through the branch circuit including the resistor and the seventh switch K7 which are connected in series, thereby accurately adjusting the charging and discharging voltages between the external charging and discharging device and the power battery 11.

In addition, referring to Fig. 2, the circuit is further described as follows:

The first switch K1, the second switch K2, the third switch K3, the fourth switch K4 and the fifth switch K5 in the switch module may be relay switches, and the switching-on or switching-off of these switches is controlled by the control module to form different loops. The first switch K1 is configured to switch on or switch off the connection between the parts of the power battery voltage regulation system 10 other than the power battery 11 and the positive electrode of the battery; the second switch K2 is configured to switch on or switch off the connection between the parts of the power battery voltage regulation system 10 other than the power battery 11 and the negative electrode of the battery; the third switch K3 is configured to switch on or switch off the connection between the charging and discharging switching module 122 and the charging and discharging interface 13, and the bridge arm group 121 and the power battery 11; the fourth switch K4 is configured to switch on or switch off the connection between the parts of the power battery voltage regulation system 10 other than the charging and discharging interface 13 and the positive electrode of the charging and discharging interface 13; and the fifth switch K5 is configured to switch on or switch off the connection between the parts of the power battery voltage regulation system 10 other than the charging and discharging interface 13 and the negative electrode of the charging and discharging interface 13.

The bridge arm group 121 and the charging and discharging switching module 122 can be implemented by an inverter in a driving system of the motor 14, wherein the inverter can be implemented by a bridge arm switch of an insulated gate bipolar transistor (IGBT). The number of bridge arms in the bridge arm group 121 is the same as the number of inductors in the motor 14. For example, if the motor 14 is a three-phase motor 14, the inverter includes three phases of bridge arms, that is, a U-phase bridge arm, a V-phase bridge arm, and a W-phase bridge arm. Each phase of bridge arms in the three phases of bridge arms include an upper bridge arm and a lower bridge arm, and the upper bridge arm and the lower bridge arm are respectively provided with a switch unit, that is, the bridge arm group 121 respectively includes an upper bridge arm switch 1211 and a lower bridge arm switch 1212 in the U-phase bridge arm, an upper bridge arm switch 1213 and a lower bridge arm switch 1214 in the V-phase bridge arm, and an upper bridge arm switch 1215 and a lower bridge arm switch 1216 in the W-phase bridge arm. The charging and discharging switching module 122 also has an upper bridge arm and a lower bridge arm, and the upper bridge arm and the lower bridge arm are respectively provided with a switch unit, that is, the charging and discharging switching module 122 includes an upper bridge arm switch 1221 and a lower bridge arm switch 1222.

The motor 14 may include multiple inductors. Taking the three-phase motor 14 as an example, the three-phase motor 14 may include three inductors, specifically: an inductor 141 connected to the U-phase bridge arm, an inductor 142 connected to the V-phase bridge arm, and an inductor 143 connected to the W-phase bridge arm. One end of the inductor 141 is connected to the connecting point of the upper bridge arm and the lower bridge arm in the U-phase bridge arm, one end of the inductor 142 is connected to the connecting point of the upper bridge arm and the lower bridge arm in the V-phase bridge arm, and one end of the inductor 143 is connected to the connecting point of the upper bridge arm and the lower bridge arm in the W-phase bridge arm. The other end of the inductor 141, the other end of the inductor 142 and the other end of the inductor 143 are connected together, and the connecting point is a three-phase center point of the motor 14.

It should be noted that the motor 14 is not limited to the three-phase motor 14, but may also be a six-phase motor 14, or the like. Correspondingly, the six-phase motor 14 may include six phases of bridge arms.

Optionally, the power battery voltage regulation system 10 may further be provided with a sixth switch K6, a seventh switch K7, a first capacitor C1, a second capacitor C2, and a resistor R.

The sixth switch K6 is arranged between the three-phase center point of the motor 14 and the connecting point of the upper bridge arm and the lower bridge arm of the charging and discharging switching module 122, and is configured to switch off or switch on the high-voltage connection between the three-phase center point of the motor 14 and the connecting point of the upper bridge arm and the lower bridge arm of the charging and discharging switching module 122. In the embodiments of the present application, the sixth switch K6 may be always in a switched-on state.

The seventh switch K7 and the resistor R are connected in series and then connected in parallel to both ends of the second switch K2, one end of the first capacitor C1 is connected to the positive electrode of the power battery 11 through the first switch K1, the other end of the first capacitor C1 is connected to the negative electrode of the power battery 11 through the second switch K2, one end of the second capacitor C2 is connected to the positive electrode of the charging and discharging interface 13 through the fourth switch K4, and the other end of the second capacitor C2 is connected to the negative electrode of the charging and discharging interface 13 through the fifth switch K5. During high-voltage connection of the power battery voltage regulation system 10, the first switch K1 and the seventh switch K7 can be first switched on to precharge the first capacitor C1 and the second capacitor C2, so as to avoid the damage to the circuit caused by a higher voltage. Specifically, a preset time may be set for switching-on of the seventh switch K7; and after the preset time, the second switch K2 is switched on, and the seventh switch K7 is switched off. In the embodiments of the present application, before the second switch K2 is switched on, the seventh switch K7 may be first switched on within a preset time; and after the preset time, the second switch K2 is switched on, and the seventh switch K7 is switched off.

The second capacitor C2 is configured to stabilize the input voltage of the charging and discharging interface 13 and absorb the peak voltage of the charging and discharging switching module 122 when switched off, so as to avoid the damage to the charging and discharging switching module 122. Both the first capacitor C1 and the second capacitor C2 can play roles in stabilizing voltages and filtering out clutters.

The power battery voltage regulation system 10 provided in the embodiments of the present application fully considers the demand for voltage regulation when the power battery 11 is charged or discharged under different circumstances, switches are arranged at key positions in the charging and discharging loops of the power battery 11, and loops of direct charging, boost charging, boost discharging and step-down discharging are respectively formed in the same circuit structure by controlling the switching-on and switching-off of different switches, so that the charging and discharging voltages of the power battery 11 can be flexibly adjusted without changing the circuit structure to meet the needs of the power battery 11 for a charging voltage or a discharging voltage in different scenarios.

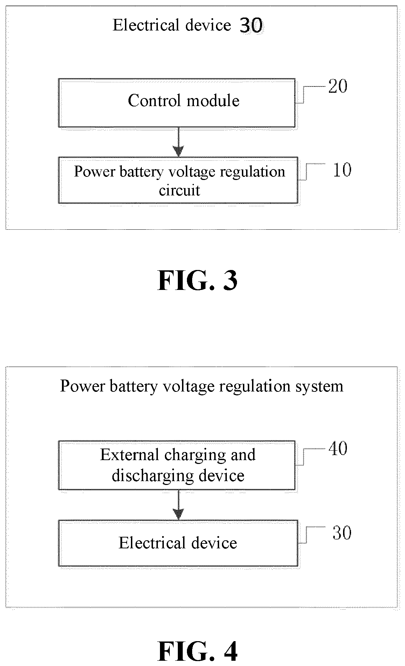

Fig. 3 is a schematic block diagram of an electrical device 30 provided in an embodiment of the present application.

As shown in Fig. 3, the electrical device 30 includes a control module 20 and a power battery voltage regulation circuit 10.

The control module is connected to the switch module and the voltage regulation switch assembly, and is configured to control the voltage regulation switch assembly and the switch module to adjust the charging and discharging voltages between the external charging and discharging device and the power battery 11.

Optionally, the apparatus for obtaining a battery voltage and an output voltage may be a BMS in the control module, and the apparatus for controlling the switching-on or switching-off of switches in the switch module may be a micro control unit (MCU) in the control module or a motor controller. The BMS can compare the obtained battery voltage and output voltage to determine a charging mode, and communicate with the MCU. For example, when the battery voltage is less than the output voltage, the BMS sends first information to the MCU, the first information is used for indicating that a direct charging mode is used for charging, and then, the MCU can control the corresponding switches to be switched on or switched off according to the first information, so as to form a charging loop of direct charging.

Based on this, the electrical device provided in this embodiment realizes the switching between different charging and discharging loops by the control module and the power battery voltage regulation circuit, thereby flexibly and efficiently adjusting the charging and discharging voltages between the external charging and discharging device and the power battery 11 according to different charging and discharging needs under a voltage regulation control signal. For example, loops of direct charging, boost charging, boost discharging and step-down discharging are respectively formed in the same circuit structure to meet the needs of the power battery 11 for a charging voltage or a discharging voltage in different scenarios.

Fig. 4 is a schematic block diagram of a power battery voltage regulation system provided in an embodiment of the present application.

As shown in Fig. 4, the present application provides a power battery voltage regulation system, including an external charging and discharging device 40 and an electrical device 30, and the external charging and discharging device 40 is connected to a charging and discharging interface 13 in the electrical device 30.

Based on this, the power battery voltage regulation system provided in this embodiment of the present application realizes the switching between different charging and discharging loops by the external charging and discharging device and the electrical device, thereby flexibly and efficiently adjusting the charging and discharging voltages between the external charging and discharging device and the power battery 11 according to different charging and discharging needs under a voltage regulation control signal. For example, loops of direct charging, boost charging, boost discharging and step-down discharging are respectively formed in the same circuit structure to meet the needs of the power battery 11 for a charging voltage or a discharging voltage in different scenarios.

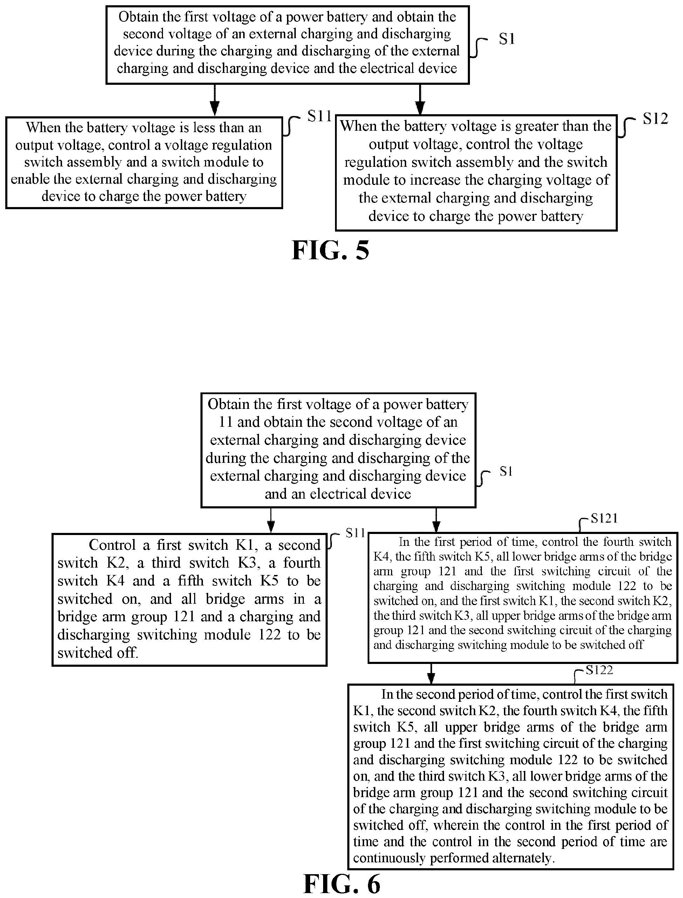

Fig. 5 is a schematic flow chart of a control method of a power battery voltage regulation system provided in an embodiment of the present application.

As shown in Fig. 5, the power battery voltage regulation method is applied to the power battery voltage regulation system in the third aspect, specifically including the following steps:

S 1: The first voltage of the power battery 11 is obtained and the second voltage of the external charging and discharging device is obtained during the charging and discharging of the external charging and discharging device and the electrical device;

and then, the voltage regulation switch assembly and the switch module are controlled to adjust the charging and discharging voltages between the external charging and discharging device and the power battery 11 according to the first voltage and the second voltage.

Based on this, the power battery voltage regulation method in this embodiment realizes the switching between different charging and discharging loops by the voltage regulation switch assembly and the switch module in the power battery voltage regulation system, thereby flexibly and efficiently adjusting the charging and discharging voltages between the external charging and discharging device and the power battery 11 according to different charging and discharging needs under a voltage regulation control signal. For example, loops of direct charging, boost charging, boost discharging and step-down discharging are respectively formed in the same circuit structure to meet the needs of the power battery 11 for a charging voltage or a discharging voltage in different scenarios.

In an implementation scenario, the first voltage is a battery voltage of the power battery 11, and the second voltage is an output voltage of the external charging and discharging device.

The voltage regulation switch assembly and the switch module are controlled to adjust the charging and discharging voltages between the external charging and discharging device and the power battery 11 according to the first voltage and the second voltage, specifically including:
S 11: When the battery voltage is less than the output voltage, the voltage regulation switch assembly and the switch module are controlled to enable the external charging and discharging device to charge the power battery.
S12: When the battery voltage is greater than the output voltage, the voltage regulation switch assembly and the switch module are controlled to increase the charging voltage of the external charging and discharging device to charge the power battery.

The power battery voltage regulation method provided based on this can flexibly adjust the charging voltage of the power battery 11 according to the relationship between the voltages of the charging device and the power battery 11, and the circuit structure of the power battery voltage regulation system is used for providing energy for the motor 14, so that the boost charging of the power battery 11 can be realized by switching-on and switching-off of different switches in the same circuit. As a result, the charging device can not only charge the power battery 11 with a voltage lower than the maximum output voltage of the charging device, but also charge the power battery 11 with a higher voltage than the maximum output voltage of the charging device. The control method can flexibly adjust the charging voltage of the power battery 11 in different scenarios, which can not only solve the compatibility problem of the external charging and discharging device, but also make the charging process of the power battery 11 not limited by the maximum output voltage of the charging device.

As shown in Fig. 6, in the power battery voltage regulation method, step S11 specifically includes:
the first switch K1, the second switch K2, the third switch K3, the fourth switch K4 and the fifth switch K5 are controlled to be switched on, and all bridge arms in the bridge arm group 121 and the charging and discharging switching module 122 are controlled to be switched off.

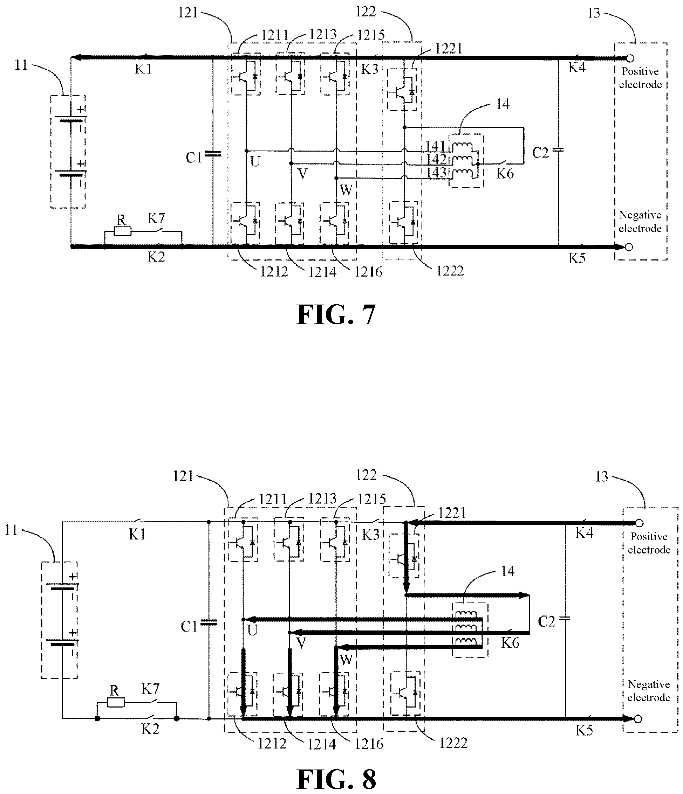

Fig. 7 is a schematic diagram of a corresponding charging loop of a power battery voltage regulation system at this time.

As shown in Fig. 7, a direct charging loop of an external charging device for a power battery can be formed.

The power battery voltage regulation method provided in the embodiments of the present application can flexibly adjust the voltage output to the power battery 11 according to different voltages of the charging device without changing the circuit structure, and the circuit structure of the power battery voltage regulation system is used for providing energy for the motor 14, so that the output voltage of the external charging and discharging device can be reduced by switching-on and switching-off of different switches in the same circuit. As a result, the charging device can charge the power battery 11 with a battery voltage lower than the maximum output voltage of the charging device.

In the power battery voltage regulation method, step S12 specifically includes: in the first period of time, the external charging and discharging device is controlled to charge the energy storage element; and in the second period of time, the external charging and discharging device and the energy storage element are controlled to charge the power battery together. In a case that the circuit structure is not changed, when the battery voltage is greater than the output voltage, the external charging and discharging device is first controlled to charge the energy storage element, and then the external charging and discharging device and the energy storage element are controlled to charge the power battery together, so as to realize continuous boost charging.

As shown in Fig. 6, S121: in the first period of time, the fourth switch K4, the fifth switch K5, all lower bridge arms of the bridge arm group 121 and the first switching circuit 1221 of the charging and discharging switching module 122 are controlled to be switched on, and the first switch K1, the second switch K2, the third switch K3, all upper bridge arms of the bridge arm group 121 and the second switching circuit 1222 of the charging and discharging switching module 122 are controlled to be switched off.

Fig. 8 is a schematic diagram of a corresponding charging loop of a power battery voltage regulation system at this time.

As shown in Fig. 8, at this time, an external charging device is connected to a motor inductor through a charging and discharging interface, and the motor inductor stores energy. The charging device only provides electrical energy for the motor 14, and the motor 14 stores energy through the inductor thereof.

S122: In the second period of time, the first switch K1, the second switch K2, the fourth switch K4, the fifth switch K5, all upper bridge arms of the bridge arm group 121 and the first switching circuit 1221 of the charging and discharging switching module 122 are controlled to be switched on, and the third switch K3, all lower bridge arms of the bridge arm group 121 and the second switching circuit 1222 of the charging and discharging switching module 122 are controlled to be switched off.

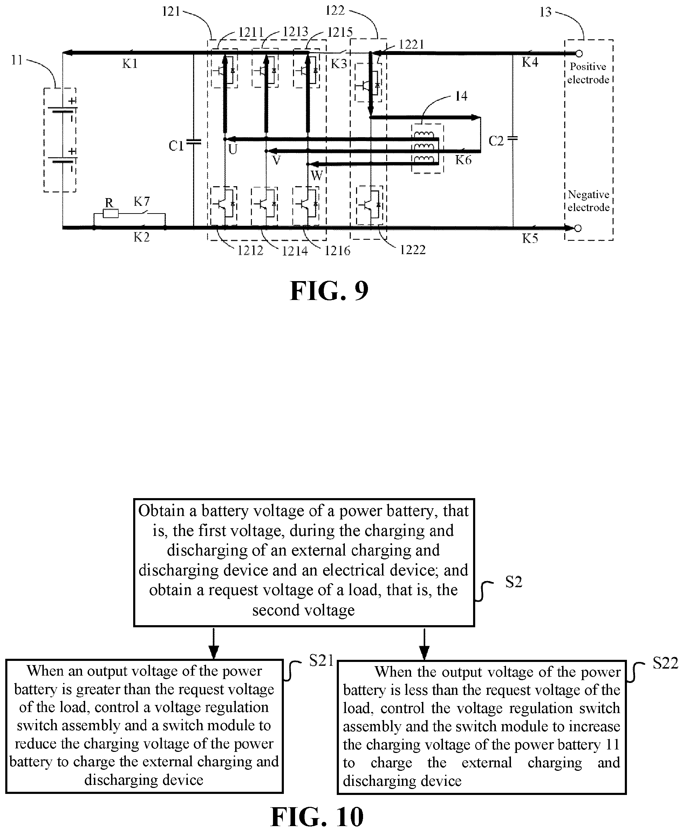

Fig. 9 is a schematic diagram of a corresponding charging loop of a power battery voltage regulation system at this time.

As shown in Fig. 9, at this time, an external charging pile is connected to a battery through a charging and discharging interface and a motor inductor, and the inductor and the external charging pile charge the battery together.

The charging device and the motor 14 in which the energy is stored in advance provide electrical energy for the power battery 11 together. In other words, the voltage provided by the charging device and the voltage provided by the motor 14 are superimposed, and the superimposed voltage is greater than the voltage of the power battery 11, so that the power battery 11 can be charged. The motor 14 can store energy in advance through a circuit in the power battery voltage regulation system 10, or an external device can provide energy for the motor 14.

Finally, the control in the first period of time and the control in the second period of time are continuously performed alternately. In the charging process of the power battery 11, the first period of time and the second period of time are controlled alternately to realize continuous charging after boosting, thereby ensuring the continuous charging process.

The embodiment provided based on this can flexibly adjust the voltage output to the power battery 11 according to different voltages of the charging device without changing the circuit structure, and the circuit structure of the power battery voltage regulation system is used for providing energy for the motor 14, so that the output voltage of the external charging and discharging device can be increased by switching-on and switching-off of different switches in the same circuit. As a result, the charging device can charge the power battery 11 with a battery voltage higher than the maximum output voltage of the charging device.

In another implementation scenario, the first voltage is an output voltage of the power battery 11, and the second voltage is a request voltage of the external charging and discharging device as a load.

Fig. 10 is a schematic flow chart of a control method of another power battery voltage regulation system provided in an embodiment of the present application.

As shown in Fig. 10, the voltage regulation switch assembly and the switch module are controlled to adjust the charging and discharging voltages between the external charging and discharging device and the power battery 11 according to the first voltage and the second voltage, specifically including:
S2: The battery voltage of the power battery 11, that is, the first voltage is obtained during the charging and discharging of the external charging and discharging device and the electrical device; the external charging and discharging device serves as a load, and the request voltage of the external charging and discharging device, that is, the second voltage is obtained;
and then, the voltage regulation switch assembly and the switch module are controlled to adjust the charging and discharging voltages between the external charging and discharging device and the power battery 11 according to the battery voltage and the request voltage.

Based on this, the control method of the power battery voltage regulation system in this embodiment can adapt to various load devices with different demand voltages without changing the circuit structure by controlling the voltage regulation switch assembly and the switch module under different circumstances, so that the power battery voltage regulation system can provide electrical energy for both load devices with a demand voltage higher than the voltage of the power battery 11 and load devices with a demand voltage lower than the voltage of the power battery 11. As a result, the discharging voltage of the power battery 11 can be flexibly adjusted in different scenarios to provide electrical energy for multiple load devices.

Specifically, the voltage regulation switch assembly and the switch module are controlled to adjust the charging and discharging voltages between the external charging and discharging device and the power battery 11 according to the battery voltage and the request voltage, specifically including:
S21: When the output voltage of the power battery is greater than the request voltage of the load, the voltage regulation switch assembly and the switch module are controlled to reduce the charging voltage of the power battery 11 to charge the external charging and discharging device.
S22: When the output voltage of the power battery is less than the request voltage of the load, the voltage regulation switch assembly and the switch module are controlled to increase the charging voltage of the power battery 11 to charge the external charging and discharging device.

Under different circumstances, by controlling the voltage regulation switch assembly and the switch module, the power battery voltage regulation system can provide electrical energy for both load devices with a demand voltage higher than the voltage of the power battery 11 and load devices with a demand voltage lower than the voltage of the power battery 11. As a result, the discharging voltage of the power battery 11 can be flexibly adjusted in different scenarios to provide electrical energy for multiple load devices.

In the power battery voltage regulation method, when the output voltage of the power battery is greater than the request voltage of the load, step S21 specifically includes: in the first period of time, the power battery is controlled to charge the energy storage element; and in the second period of time, the energy storage element is controlled to charge the external charging and discharging device as a load. In a case that the circuit structure is not changed, when the battery voltage is greater than the output voltage, the power battery is controlled first to charge the energy storage element, and then the energy storage element is controlled to charge the external charging and discharging device as a load, so as to realize step-down discharging.

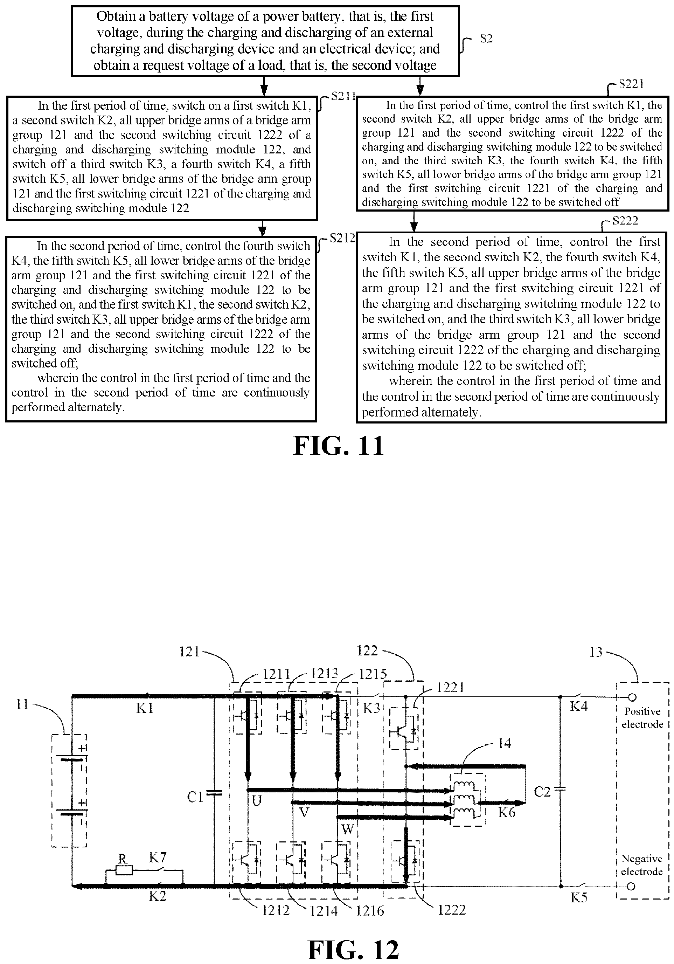

As shown in Fig. 11, S211: in the first period of time, the first switch K1, the second switch K2, all upper bridge arms of the bridge arm group 121 and the second switching circuit 1222 of the charging and discharging switching module are switched on, and the third switch K3, the fourth switch K4, the fifth switch K5, all lower bridge arms of the bridge arm group 121 and the first switching circuit 1221 of the charging and discharging switching module 122 are switched off.

Fig. 12 is a schematic diagram of a corresponding charging loop of a power battery voltage regulation system at this time.

As shown in Fig. 12, at this time, the battery energy can be used for realizing energy storage of a motor inductor. The power battery 11 only provides electrical energy for the motor 14, and the motor 14 stores energy through the inductor thereof.

S212: In the second period of time, the fourth switch K4, the fifth switch K5, all lower bridge arms of the bridge arm group 121 and the first switching circuit 1221 of the charging and discharging switching module 122 are controlled to be switched on, and the first switch K1, the second switch K2, the third switch K3, all upper bridge arms of the bridge arm group 121 and the second switching circuit 1222 of the charging and discharging switching module 122 are controlled to be switched off.

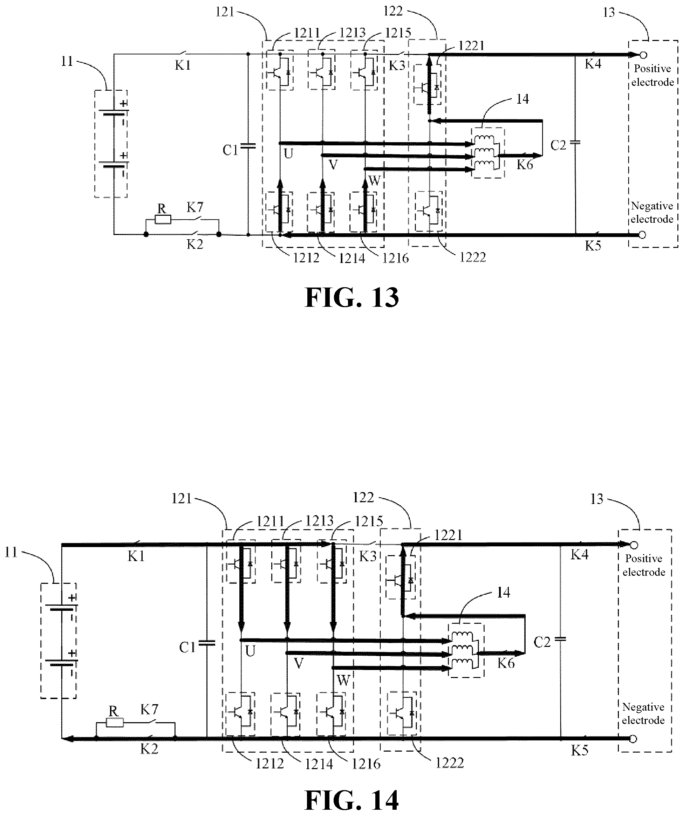

Fig. 13 is a schematic diagram of a corresponding charging loop of a power battery voltage regulation system at this time.

As shown in Fig. 13, at this time, the charging voltage for charging a load is reduced, and the motor inductor is used as a power source to output electricity to an external load.

In the loop formed by step-down charging, only the motor 14 in which the energy is stored in advance provides electrical energy to a load device, wherein the energy stored in advance in the motor 14 can be provided by the circuit of the power battery voltage regulation system 10.

Finally, the control in the first period of time and the control in the second period of time are continuously performed alternately. In the charging process of the power battery 11, the first period of time and the second period of time are controlled alternately to realize continuous discharging after step-down, thereby ensuring the continuous discharging process.

In conclusion, the output voltage can be flexibly adjusted according to the needs of load devices without changing the circuit structure. Furthermore, the circuit structure of the power battery voltage regulation system is used for providing energy for the motor 14, so that the step-down discharging of the power battery 11 can be realized by switching-on and switching-off of different switches in the same circuit. As a result, the power battery voltage regulation system can provide electrical energy for load devices with a demand voltage lower than the voltage of the power battery 11.

In the power battery voltage regulation method, step S22 specifically includes: in the first period of time, the power battery is controlled to charge the energy storage element; and in the second period of time, the power battery and the energy storage element are controlled to charge the external charging and discharging device as a load together. In a case that the circuit structure is not changed, when the battery voltage is less than the request voltage, the power battery is controlled first to charge the energy storage element, and then the power battery and the energy storage element are controlled to charge the external charging and discharging device as a load together, so as to realize boost discharging.

As shown in Fig. 11, S221: in the first period of time, the first switch K1, the second switch K2, all upper bridge arms of the bridge arm group 121 and the second switching circuit 1222 of the charging and discharging switching module 122 are controlled to be switched on, and the third switch K3, the fourth switch K4, the fifth switch K5, all lower bridge arms of the bridge arm group 121 and the first switching circuit 1221 of the charging and discharging switching module 122 are controlled to be switched off.

Fig. 12 is a schematic diagram of a corresponding charging loop of a power battery voltage regulation system at this time.

As shown in Fig. 12, at this time, the battery energy can be used for realizing energy storage of a motor inductor. The power battery 11 only provides electrical energy for the motor 14, and the motor 14 stores energy through the inductor thereof.

S222: In the second period of time, the first switch K1, the second switch K2, the fourth switch K4, the fifth switch K5, all upper bridge arms of the bridge arm group 121 and the first switching circuit 1221 of the charging and discharging switching module 122 are controlled to be switched on, and the third switch K3, all lower bridge arms of the bridge arm group 121 and the second switching circuit 1222 of the charging and discharging switching module 122 are controlled to be switched off.

Fig. 14 is a schematic diagram of a corresponding charging loop of a power battery voltage regulation system at this time.

As shown in Fig. 14, at this time, the charging voltage for charging a load is increased, and the power battery and the motor inductor are used as power sources to output electricity to an external load.

The power battery 11 and the motor 14 in which the energy is stored in advance provide electrical energy for a load device together. In other words, the voltage provided by the power battery 11 and the voltage provided by the motor 14 are superimposed, and the superimposed voltage can be matched with the request voltage of the load device, that is, electrical energy can be provided for the load device.

Finally, the control in the first period of time and the control in the second period of time are continuously performed alternately. In the charging process of the power battery 11, the first period of time and the second period of time are controlled alternately to realize continuous discharging after boosting, thereby ensuring the continuous discharging process.

The embodiments provided in the present application can flexibly adjust the output voltage according to the needs of load devices without changing the circuit structure, and the circuit structure of the power battery voltage regulation system is used for providing energy for the motor 14, so that the boost discharging of the power battery 11 can be realized by switching-on and switching-off of different switches in the same circuit. As a result, the power battery voltage regulation system can provide electrical energy for load devices with a demand voltage higher than the voltage of the power battery 11.

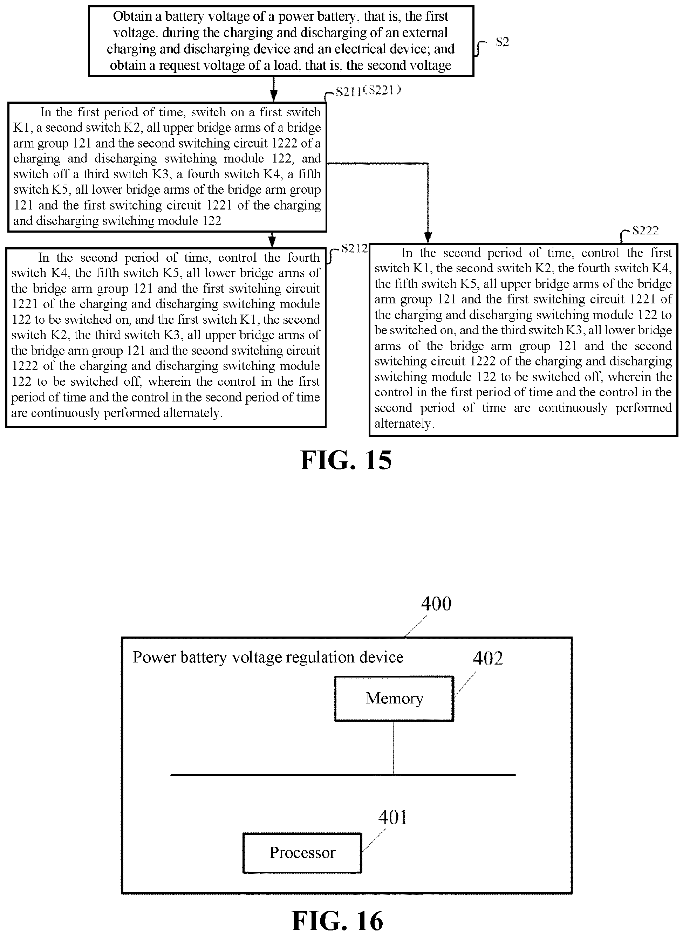

Fig. 15 is a schematic flow chart of a control method of another power battery voltage regulation system provided in an embodiment of the present application.

In another preferred embodiment, in the process of charging an external load by a power battery as a power source, both discharging and charging require step S211 or step S221 which are the same steps, and require the power battery to store energy for a motor inductor first.

Therefore, as shown in Fig. 15, step S211 or S221 is performed first, that is, in the first period of time, the first switch K1, the second switch K2, all upper bridge arms of the bridge arm group 121 and the second switching circuit 1222 of the charging and discharging switching module 122 are switched on, and the third switch K3, the fourth switch K4, the fifth switch K5, all lower bridge arms of the bridge arm group 121 and the first switching circuit 1221 of the charging and discharging switching module 122 are switched off.

Step S212 or S222 is performed according to boosting or step-down. Details will not be repeated here. Please refer to the above solution contents.

Fig. 16 shows a schematic structural diagram of a power battery voltage regulation device 400 according to an embodiment of the present application.

As shown in Fig. 16, the power battery voltage regulation device 400 includes:
a memory 402, configured to store executable instructions; and
a central processing unit (CPU) 401, connected to the memory 402 to execute the executable instructions to complete a motion vector prediction method.

Those skilled in the art can understand that the schematic diagram 16 is only an example of the power battery voltage regulation device 400, and does not constitute a limitation to the power battery voltage regulation device 400. The power battery voltage regulation device 400 may include more or less components than those shown in the figure, or combine some components, or have different components. For example, the power battery voltage regulation device 400 may further include input and output devices, network access devices, buses, and the like.

The CPU 401 may also be other general-purpose processors, digital signal processors (DSP), application specific integrated circuits (ASIC), field-programmable gate arrays (FPGA) or other programmable logic devices, discrete gate or transistor logic devices, discrete hardware components, and the like. The general-purpose processor may be a microprocessor, or the processor 401 may be any conventional processor, or the like. The processor 401 is a control center of the power battery voltage regulation device 400, and various interfaces and lines are used to connect all parts of the entire power battery voltage regulation device 400.

The memory 402 can be configured to store computer-readable instructions. The processor 401 implements various functions of the power battery voltage regulation device 400 by running or executing the computer-readable instructions or modules stored in the memory 402, and invoking the data stored in the memory 402. The memory 402 may mainly include a program storage area and a data storage area, wherein the program storage area may store an operating system, an application program (such as a sound playback function, an image playback function, or the like) required by at least one function; and the data storage area may store the data created according to the use of the power battery voltage regulation device 400, and the like. In addition, the memory 402 may include a hard disk, an internal memory, a plug-in hard disk, a smart media card (SMC), a secure digital (SD) card, a flash card, at least one magnetic disk storage device, a flash memory device, a read-only memory (ROM), a random access memory (RAM), or other nonvolatile/volatile storage devices.

If the integrated module of the power battery voltage regulation device 400 is implemented as a software function module and sold or used as an independent product, the integrated module can be stored in a computer-readable storage medium. Based on this understanding, the present invention implements all or part of the processes in the above embodiment methods, and can also be completed by instructing related hardware through computer-readable instructions. The computer-readable instructions can be stored in a computer-readable storage medium. The computer-readable instructions, when executed, by a processor can implement the steps in each of the above method embodiments.

The power battery voltage regulation device provided in the embodiments of the present application realizes the switching between different charging and discharging loops by the voltage regulation switch assembly and the switch module in the power battery voltage regulation system, thereby flexibly and efficiently adjusting the charging and discharging voltages between the external charging and discharging device and the power battery 11 according to different charging and discharging needs under a voltage regulation control signal. For example, loops of direct charging, boost charging, boost discharging and step-down discharging are respectively formed in the same circuit structure to meet the needs of the power battery 11 for a charging voltage or a discharging voltage in different scenarios.

Finally, the present application further provides a computer-readable storage medium storing a computer program. The computer program, when executed by a processor, implements the power battery voltage regulation method.

Those of ordinary skill in the art can realize that units and algorithm steps of each example described with reference to the embodiments disclosed herein can be implemented by electronic hardware, or a combination of computer software and electronic hardware. Whether these functions are performed in hardware or software depends on a specific application and a design constraint condition of the technical solution. Professionals can implement the described functions using different methods for each particular application, but such implementation should not be considered beyond the scope of the present application.

Those skilled in the art can clearly understand that, for the convenience and brevity of description, the specific working processes of the system, apparatus, and unit described above can be obtained with reference to the corresponding processes in the foregoing method embodiments, which will not be repeated here.

In several embodiments provided in the present application, it should be understood that the disclosed system, apparatus, and method may be implemented in other manners. For example, the apparatus example described above is only illustrative. For example, the division of the units is only a logical function division. In an actual implementation, there may be other division methods. For example, a plurality of units or components may be combined or may be integrated into another system, or some features may be ignored, or not implemented. On the other hand, the shown or discussed mutual coupling or direct coupling or communication connection may be indirect coupling or communication connection through some interfaces, apparatuses, or units, and may be in electrical, mechanical, or in other forms.

The units described as separate components may or may not be physically separated, and components displayed as units may or may not be physical units, that is, may be located in one place, or may be distributed to a plurality of network units. Some or all of the units may be selected according to actual needs to achieve the purpose of the solution in this embodiment.

In addition, each functional unit in each embodiment of the present application may be integrated into one processing unit, each unit may separately exist physically, or two or more units may be integrated into one unit.

If the functions described above are realized in the form of software function units and sold or used as independent products, they can be stored in a computer-readable storage medium. Based on this understanding, the technical solution of the present application is essentially or the part that contributes to the prior art or the part of the technical solution can be embodied in the form of a software product. The computer software product is stored in a storage medium, and includes several instructions for causing a computer device (which may be a personal computer, a server, a network device, or the like) to perform all or part of the methods described in each embodiment of the present application. The above storage medium includes various media capable of storing program codes, such as a U disk, a mobile hard disk, a ROM, a RAM, a magnetic disk and an optical disk.

The foregoing descriptions are merely specific embodiments of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be determined with reference to the protection scope of the claims.

## Claims

1. A power battery voltage regulation circuit, comprising a power battery, a heating module, a charging and discharging interface, and a voltage regulation switch assembly, wherein
the heating module comprises an energy storage element and a switch module;
the power battery and the switch module are connected in parallel; an external charging and discharging device is connected in parallel with the power battery through the charging and discharging interface;
the voltage regulation switch assembly comprises multiple switches, and the multiple switches are arranged between the charging and discharging interface and the power battery; and
the voltage regulation switch assembly and the switch module are configured to adjust the charging and discharging voltages between the external charging and discharging device and the power battery in response to a voltage regulation control signal.

2. The regulation circuit according to claim 1, wherein the voltage regulation switch assembly comprises a first switch, a second switch, a third switch, a fourth switch, and a fifth switch; the first switch and the second switch are respectively arranged on the positive electrode side and the negative electrode side of the power battery; the fourth switch and the fifth switch are respectively arranged on the positive electrode side and the negative electrode side of the charging and discharging interface; and the third switch is arranged between the positive electrode of the power battery and the charging and discharging interface.

3. The regulation circuit according to claim 2, wherein one end of the first switch is connected to the positive electrode of the power battery, and the other end of the first switch is connected to the first end of the switch module; one end of the second switch is connected to the negative electrode of the power battery, and the other end of the second switch is connected to the second end of the switch module;
the switch module comprises a charging and discharging switching module and a bridge arm group which are connected in parallel, one end of the third switch is collinearly connected to all upper bridge arms of the bridge arm group, and the other end of the third switch is connected to the first end of the charging and discharging switching module;
one end of the fourth switch is connected to the positive electrode of the charging and discharging interface, and the other end of the fourth switch is connected to the first end of the charging and discharging switching module; and one end of the fifth switch is connected to the negative electrode of the charging and discharging interface, and the other end of the fifth switch is collinearly connected to the second end of the charging and discharging switching module and all lower bridge arms of the bridge arm group.

4. The regulation circuit according to claim 1, wherein the switch module comprises a charging and discharging switching module and a bridge arm group which are connected in parallel, the first end of the energy storage element is connected to the bridge arm group, and the second end of the energy storage element is connected to the charging and discharging switching module.

5. The regulation circuit according to claim 4, wherein the energy storage element comprises an M-phase motor; the bridge arm group comprises M phases of bridge arms, wherein M is a positive integer; M phases of windings of the M-phase motor are respectively connected to the connecting point of the upper and lower bridge arms in each phase of bridge arms in the M phases of bridge arms in a mode of one-to-one correspondence;
the charging and discharging switching module comprises a first switching circuit and a second switching circuit which are connected in series; and the connecting point of the first switching circuit and the second switching circuit is connected to the neutral point of the M-phase motor.

6. The regulation circuit according to claim 5, wherein both the first switching circuit and the second switching circuit comprise a triode and a flyback diode which are connected in parallel.

7. The regulation circuit according to claim 5, wherein both the first switching circuit and the second switching circuit comprise a triode or a relay switch.

8. The regulation circuit according to claim 5, wherein the first switching circuit comprises a diode, and the second switching circuit comprises a switch; or, the first switching circuit comprises a switch, and the second switching circuit comprises a diode.

9. The regulation circuit according to claim 5, wherein a sixth switch is arranged between the connecting point of the first switching circuit and the second switching circuit and the neutral point of the M-phase motor.

10. The regulation circuit according to any one of claims 1 to 9, wherein both ends of the power battery are connected in parallel with a first voltage stabilizing capacitor, and both ends of the charging and discharging interface are connected in parallel with a second voltage stabilizing capacitor.

11. The regulation circuit according to any one of claims 1 to 9, wherein the second switch is connected in parallel with a branch circuit, and the branch circuit comprises a resistor and a seventh switch which are connected in series.

12. An electrical device, comprising a control module and the power battery voltage regulation circuit according to any one of claims 1 to 11, wherein
the control module is connected to the switch module and the voltage regulation switch assembly, and is configured to control the voltage regulation switch assembly and the switch module to adjust the charging and discharging voltages between the external charging and discharging device and the power battery.

13. A power battery voltage regulation system, comprising an external charging and discharging device and the electrical device according to claim 12, wherein the external charging and discharging device is connected to the charging and discharging interface in the electrical device.

14. A power battery voltage regulation method applied to the power battery voltage regulation system according to claim 13, comprising:
obtaining the first voltage of the power battery, and obtaining the second voltage of the external charging and discharging device; and
controlling, according to the first voltage and the second voltage, the voltage regulation switch assembly and the switch module to adjust the charging and discharging voltages between the external charging and discharging device and the power battery.

15. The power battery voltage regulation method according to claim 14, wherein the first voltage is a battery voltage of the power battery, and the second voltage is an output voltage of the external charging and discharging device; or, the first voltage is an output voltage of the power battery, and the second voltage is a request voltage of the external charging and discharging device as a load.

16. The power battery voltage regulation method according to claim 15, wherein the controlling, according to the first voltage and the second voltage, the voltage regulation switch assembly and the switch module to adjust the charging and discharging voltages between the external charging and discharging device and the power battery specifically comprises:
when the battery voltage is less than the output voltage, controlling the voltage regulation switch assembly and the switch module to enable the external charging and discharging device to charge the power battery; and
when the battery voltage is greater than the output voltage, controlling the voltage regulation switch assembly and the switch module to increase the charging voltage of the external charging and discharging device to charge the power battery.

17. The power battery voltage regulation method according to claim 16, wherein the switch module comprises a charging and discharging switching module and a bridge arm group which are connected in parallel; the voltage regulation switch assembly comprises a first switch, a second switch, a third switch, a fourth switch, and a fifth switch; and
the controlling the voltage regulation switch assembly and the switch module to enable the external charging and discharging device to charge the power battery specifically comprises:
controlling the first switch, the second switch, the third switch, the fourth switch and the fifth switch to be switched on, and all bridge arms in the bridge arm group and the charging and discharging switching module to be switched off.

18. The power battery voltage regulation method according to claim 16, wherein the controlling the voltage regulation switch assembly and the switch module to increase the charging voltage of the external charging and discharging device to charge the power battery specifically comprises:
in the first period of time, controlling the external charging and discharging device to charge the energy storage element; and
in the second period of time, controlling the external charging and discharging device and the energy storage element to charge the power battery together.

19. The power battery voltage regulation method according to claim 16 or 18, wherein the switch module comprises a charging and discharging switching module and a bridge arm group which are connected in parallel; the voltage regulation switch assembly comprises a first switch, a second switch, a third switch, a fourth switch, and a fifth switch;
the controlling the voltage regulation switch assembly and the switch module to increase the charging voltage of the external charging and discharging device to charge the power battery specifically comprises:
in the first period of time, controlling the fourth switch, the fifth switch, all lower bridge arms of the bridge arm group and the first switching circuit of the charging and discharging switching module to be switched on, and the first switch, the second switch, the third switch, all upper bridge arms of the bridge arm group and the second switching circuit of the charging and discharging switching module to be switched off; and
in the second period of time, controlling the first switch, the second switch, the fourth switch, the fifth switch, all upper bridge arms of the bridge arm group and the first switching circuit of the charging and discharging switching module to be switched on, and the third switch, all lower bridge arms of the bridge arm group and the second switching circuit of the charging and discharging switching module to be switched off,
wherein the control in the first period of time and the control in the second period of time are continuously performed alternately.

20. The power battery voltage regulation method according to claim 15, wherein the controlling, according to the first voltage and the second voltage, the voltage regulation switch assembly and the switch module to adjust the charging and discharging voltages between the external charging and discharging device and the power battery specifically comprises:
when the output voltage is greater than the request voltage, controlling the voltage regulation switch assembly and the switch module to reduce the charging voltage of the power battery to charge the external charging and discharging device; and
when the output voltage is less than the request voltage, controlling the voltage regulation switch assembly and the switch module to increase the charging voltage of the power battery to charge the external charging and discharging device.

21. The power battery voltage regulation method according to claim 20, wherein the controlling the voltage regulation switch assembly and the switch module to reduce the charging voltage of the power battery to charge the external charging and discharging device specifically comprises:
in the first period of time, controlling the power battery to charge the energy storage element; and
in the second period of time, controlling the energy storage element to charge the external charging and discharging device as a load.

22. The power battery voltage regulation method according to claim 20 or 21, wherein the switch module comprises a charging and discharging switching module and a bridge arm group which are connected in parallel; the voltage regulation switch assembly comprises a first switch, a second switch, a third switch, a fourth switch, and a fifth switch; the controlling the voltage regulation switch assembly and the switch module to reduce the charging voltage of the power battery to charge the external charging and discharging device specifically comprises:
in the first period of time, switching on controlling the first switch, the second switch, all upper bridge arms of the bridge arm group and the second switching circuit of the charging and discharging switching module, and switching off the third switch, the fourth switch, the fifth switch, all lower bridge arms of the bridge arm group and the first switching circuit of the charging and discharging switching module; and
in the second period of time, controlling the fourth switch, the fifth switch, all lower bridge arms of the bridge arm group and the first switching circuit of the charging and discharging switching module to be switched on, and the first switch, the second switch, the third switch, all upper bridge arms of the bridge arm group and the second switching circuit of the charging and discharging switching module to be switched off,
wherein the control in the first period of time and the control in the second period of time are continuously performed alternately.

23. The power battery voltage regulation method according to claim 20, wherein the controlling the voltage regulation switch assembly and the switch module to increase the charging voltage of the power battery to charge the external charging and discharging device specifically comprises:
in the first period of time, controlling the power battery to charge the energy storage element; and
in the second period of time, controlling the power battery and the energy storage element to charge the external charging and discharging device as a load together.

24. The power battery voltage regulation method according to claim 20 or 23, wherein the switch module comprises a charging and discharging switching module and a bridge arm group which are connected in parallel; the voltage regulation switch assembly comprises a first switch, a second switch, a third switch, a fourth switch, and a fifth switch; the controlling the voltage regulation switch assembly and the switch module to increase the charging voltage of the power battery to charge the external charging and discharging device specifically comprises:
in the first period of time, controlling the first switch, the second switch, all upper bridge arms of the bridge arm group and the second switching circuit of the charging and discharging switching module to be switched on, and the third switch, the fourth switch, the fifth switch, all lower bridge arms of the bridge arm group and the first switching circuit of the charging and discharging switching module to be switched off; and
in the second period of time, controlling the first switch, the second switch, the fourth switch, the fifth switch, all upper bridge arms of the bridge arm group and the first switching circuit of the charging and discharging switching module to be switched on, and the third switch, all lower bridge arms of the bridge arm group and the second switching circuit of the charging and discharging switching module to be switched off,
wherein the control in the first period of time and the control in the second period of time are continuously performed alternately.

25. A power battery voltage regulation device, comprising:
a memory, configured to store executable instructions; and
a processor connected to the memory to execute the executable instructions to complete the power battery voltage regulation method according to any one of claims 14 to 24.

26. A computer-readable storage medium storing a computer program, wherein the computer program is executed by a processor to implement the power battery voltage regulation method according to any one of claims 14 to 24.
